(19) **Europäisches Patentamt / European Patent Office / Office européen des brevets**

(11) **EP 2 572 253 B1**

(12) **FASCICULE DE BREVET EUROPEEN**

(45) Date de publication et mention
de la délivrance du brevet:
**11.10.2017 Bulletin 2017/41**

(21) Numéro de dépôt: **11725170.2**

(22) Date de dépôt: **13.05.2011**

(51) Int Cl.:
***G06F 1/32*** *(2006.01)*

(86) Numéro de dépôt international:
**PCT/FR2011/051079**

(87) Numéro de publication internationale:
**WO 2011/144847 (24.11.2011 Gazette 2011/47)**

(54) **PROCEDE D'OPTIMISATION DE GESTION DE VEILLE D'UN MICROPROCESSEUR PERMETTANT LA MISE EN OEUVRE DE PLUSIEURS COEURS LOGIQUES ET PROGRAMME D'ORDINATEUR METTANT EN OEUVRE UN TEL PROCEDE**

VERFAHREN FÜR OPTIMIERTE STANDBY-VERWALTUNG EINES MIKROPROZESSSORS ZUR IMPLEMENTIERUNG MEHRERER LOGISCHER KERNE UND COMPUTERPROGRAMM ZUR UMSETZUNG DIESES VERFAHRENS

METHOD OF OPTIMIZING STANDBY MANAGEMENT OF A MICROPROCESSOR ALLOWING IMPLEMENTATION OF SEVERAL LOGIC CORES AND COMPUTER PROGRAM IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2010 FR 1002102**

(43) Date de publication de la demande:
**27.03.2013 Bulletin 2013/13**

(73) Titulaire: **Bull SAS**
**78340 Les Clayes-sous-Bois (FR)**

(72) Inventeurs:
• **BRU, Xavier**
**F-38640 Claix (FR)**

• **WELLENREITER, François**
**F-38120 Saint-Egreve (FR)**
• **WELTERLEN, Benoît**
**F-38000 Grenoble (FR)**

(74) Mandataire: **Santarelli**
**49, avenue des Champs-Elysées**
**75008 Paris (FR)**

(56) Documents cités:
**US-A1- 2004 107 369     US-A1- 2004 107 374**
**US-A1- 2006 069 936**

**Description**

La présente invention concerne la gestion de veille dans des microprocesseurs et plus particulièrement un procédé d'optimisation de gestion de veille d'un microprocesseur permettant la mise en oeuvre de plusieurs coeurs logiques, par exemple un microprocesseur mettant en oeuvre une technologie connue sous le nom de *simultaneous multi-threading*, notamment dans le contexte du calcul haute performance, ainsi qu'un programme d'ordinateur mettant en oeuvre un tel procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens Ethernet ou Infiniband (Ethernet et Infiniband sont des marques).

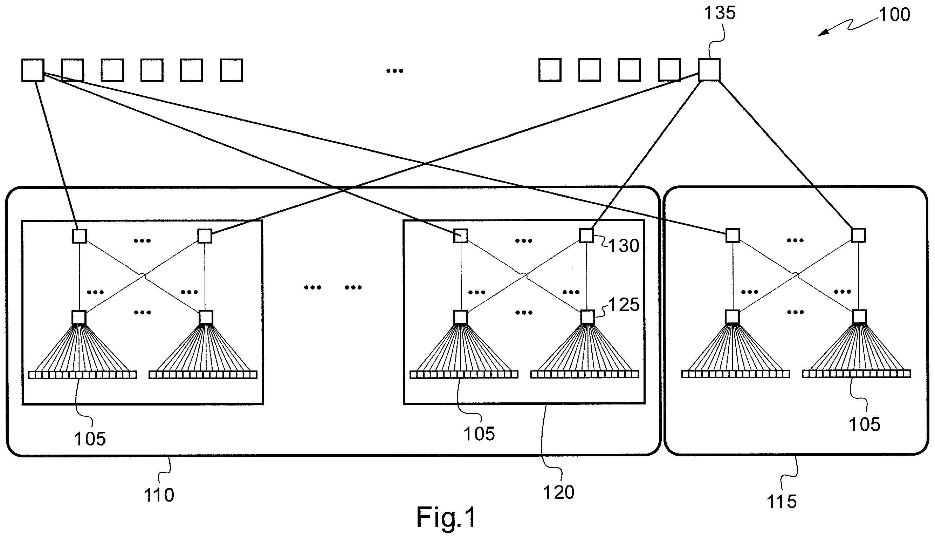

La figure 1 illustre schématiquement un exemple d'une topologie 100 d'un cluster, de type *fat-tree*. Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

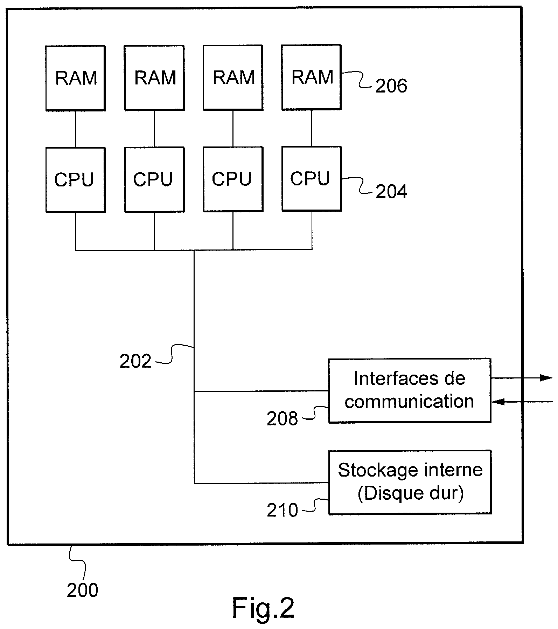

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :

- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le noeud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Pour améliorer les performances de chaque noeud, les microprocesseurs utilisés sont souvent des microprocesseurs multi-coeurs, c'est-à-dire des microprocesseurs comprenant plusieurs coeurs pouvant être utilisés en parallèle.

En outre, certains microprocesseurs comprennent plusieurs coeurs logiques, chaque coeur physique étant adapté à mettre en oeuvre plusieurs coeurs logiques. Cette technologie, appelée, en terminologie anglo-saxonne, *simultaneous multi-threading* (ou *hyperthreading* selon l'implémentation d'Intel, Intel est une marque), permet à plusieurs processus élémentaires (appelés *threads* en terminologie anglo-saxonne) d'être exécutés de façon quasi-parallèle dans un coeur physique d'un microprocesseur (les contextes d'exécution sont chargés en même temps et les processus élémentaires se partagent le noyau d'exécution). Un coeur physique mettant en oeuvre cette technologie est ainsi généralement perçu comme un double-coeur par la couche logique exploitant le coeur physique.

Un coeur physique mettant en oeuvre cette technologie comprend des ressources partagées entre les coeurs logiques et des ressources propres à chaque coeur logique. Les ressources partagées sont typiquement les unités d'exécution, les mémoires caches et les interfaces de bus. Les ressources propres sont notamment les registres de données et d'instructions du coeur logique, de segments et de contrôle ainsi que le contrôleur d'interruption (appelé APIC, sigle *d'Advanced Programmable Interrupt Controller* en terminologie anglo-saxonne).

Il est observé ici qu'il existe, pour ces systèmes, des solutions de gestion d'énergie. Ainsi, par exemple, la demande de brevet US 2004/0107374 décrit un gestionnaire d'énergie basé sur des interruptions pour gérer l'état d'un processeur physique comprenant plusieurs processeurs logiques. Lorsqu'une telle interruption est générée, l'état des processeurs logiques est vérifié de telle sorte que lorsqu'il est déterminé que tous les processeurs logiques sont inactifs, le processeur physique est placé dans un mode à basse consommation. De façon similaire, la demande de brevet US 2004/0107369 décrit un système de gestion d'énergie basé sur des interruptions, dans lequel l'état d'un processeur physique est contrôlé en fonction de niveaux de performances demandées de processeurs logiques mis en oeuvre dans ce processeur physique. La demande de brevet US 2006/0069936 décrit un autre exemple de gestionnaire d'énergie pour gérer consommation et performances dans un système multi-processeurs.

Cependant, alors que cette technologie permet d'améliorer significativement les performances d'un microprocesseur pour des applications particulières, notamment des applications de traitement d'images, il a été observé que ces performances n'étaient que peu améliorées, voir dégradées, pour d'autres applications, notamment des applications de calcul scientifique. Elle est donc généralement désactivée dans les clusters utilisés pour du calcul haute performance, ce qui va à l'encontre du principe selon lequel les clusters sont optimisés pour utiliser au mieux leurs ressources.

L'invention permet de résoudre au moins un des problèmes exposés précédemment.

L'invention a ainsi pour objet un procédé pour ordinateur d'optimisation de gestion de mise en veille d'au moins une partie d'un microprocesseur dudit ordinateur, ledit au moins un microprocesseur permettant la mise en oeuvre d'au moins deux coeurs logiques, ledit au moins un microprocesseur comprenant des moyens de mise en veille d'au moins une ressource commune auxdits au moins deux coeurs logiques, ce procédé étant mis en oeuvre dans une couche logique dudit ordinateur et comprenant les étapes suivantes,

- détermination d'un état de veille souhaité pour chacun desdits au moins deux coeurs logiques ;
- comparaison dudit état de veille souhaité de l'un desdits au moins deux coeurs logiques avec ledit état de veille souhaité de l'autre desdits au moins deux coeurs logiques ; et,
- en réponse à ladite comparaison, lancement d'instructions préparant à ladite mise en veille ou permettant la restauration dudit un desdits au moins deux coeurs logiques après une période de veille, ladite étape de comparaison comprenant les étapes suivantes,
- estimation d'un état de veille dudit microprocesseur selon ledit état de veille souhaité pour chacun desdits au moins deux coeurs logiques ; et
- comparaison dudit état de veille estimé dudit microprocesseur avec ledit état de veille souhaité dudit un desdits au moins deux coeurs logiques,

lesdites instructions préparant à ladite mise en veille ou permettant la restauration dudit un desdits au moins deux coeurs logiques étant lancées si ledit état de veille estimé dudit microprocesseur correspond audit état de veille évalué dudit un desdits au moins deux coeurs logiques

Le procédé selon l'invention permet ainsi de mettre en oeuvre plusieurs coeurs logiques dans un même microprocesseur sans dégrader sensiblement les performances de ce dernier lorsqu'une fonction de mise en veille de certaines ressources du microprocesseur est utilisée. Le nombre de comparaisons entre les états de veille souhaités des coeurs logiques est limité, notamment lorsque plus de deux coeurs logiques sont mis en oeuvre.

De façon avantageuse, le procédé comprend en outre une étape de détection de changement d'un état de veille souhaité d'au moins ledit un desdits au moins deux coeurs logiques, lesdites étapes de comparaison et de lancement d'instructions n'étant effectuées que si un changement d'un état de veille souhaité d'au moins ledit un desdits au moins deux coeurs logiques est détecté. Cette étape de détection est, de préférence, directement mise en oeuvre par un système d'exploitation auquel appartient ladite couche logique.

Selon un mode de réalisation particulier, ledit au moins un microprocesseur est un microprocesseur multi-coeurs, lesdits au moins deux coeurs logiques étant mis en oeuvre dans un même coeur physique. Le procédé selon l'invention peut ainsi être mis en oeuvre dans des microprocesseurs performants et adaptés, en particulier, au contexte de calcul haute performance.

Toujours selon un mode de réalisation particulier, le procédé comprend en outre une étape de transmission dudit état de veille souhaité dudit un desdits au moins deux coeurs logiques, ladite étape de transmission étant exécutée après ladite étape de lancement d'instructions. La mise en oeuvre du procédé selon l'invention ne requiert ainsi aucune modification du processeur utilisé.

Ladite couche logique appartient, de préférence, à un système d'exploitation mis en oeuvre dans ledit ordinateur.

Le procédé comprend, de préférence, une étape initiale de vérification d'activation d'un mode permettant la mise en oeuvre de coeurs logiques dans ledit microprocesseur. Ainsi, le procédé selon l'invention n'est mis en oeuvre que de façon opportune.

La mise en oeuvre desdits au moins deux coeurs logiques est, par exemple, basée sur un mode appelé *simultaneous multi-threading.*

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un moyen de stockage d'informations, amovible ou non, partiellement ou totalement lisible par un ordinateur ou un microprocesseur comportant des instructions de code d'un programme d'ordinateur pour l'exécution de chacune des étapes du procédé décrit précédemment.

Les avantages procurés par ce programme d'ordinateur et ce moyen de stockage sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :

- la figure 1 illustre un exemple de topologie d'un cluster ;
- la figure 2 illustre un exemple d'architecture d'un noeud d'un cluster ;
- la figure 3 représente de façon simplifiée l'architecture logique d'un microprocesseur d'un noeud appartenant à un cluster, le microprocesseur comprenant ici deux coeurs mettant en oeuvre chacun deux coeurs logiques ; et,
- la figure 4 illustre un exemple d'algorithme mis en oeuvre par un système d'exploitation ou, plus généralement, par une couche logique d'un ordinateur, pour contrôler un processus de mise en veille d'un coeur physique d'un microprocesseur coopérant avec ce système d'exploitation ou cette couche logique selon l'état de veille souhaité associé à chaque coeur logique mis en oeuvre dans ce coeur physique.

Comme indiqué précédemment, de nombreux microprocesseurs susceptibles d'être utilisés dans des noeuds de clusters mettent en oeuvre la technologie appelée *simultaneous multi-threading* (ou *hyperthreading* selon l'implémentation d'Intel, Intel est une marque) permettant de créer des coeurs logiques. Lors de l'utilisation de ces microprocesseurs, cette technologie peut être activée ou non.

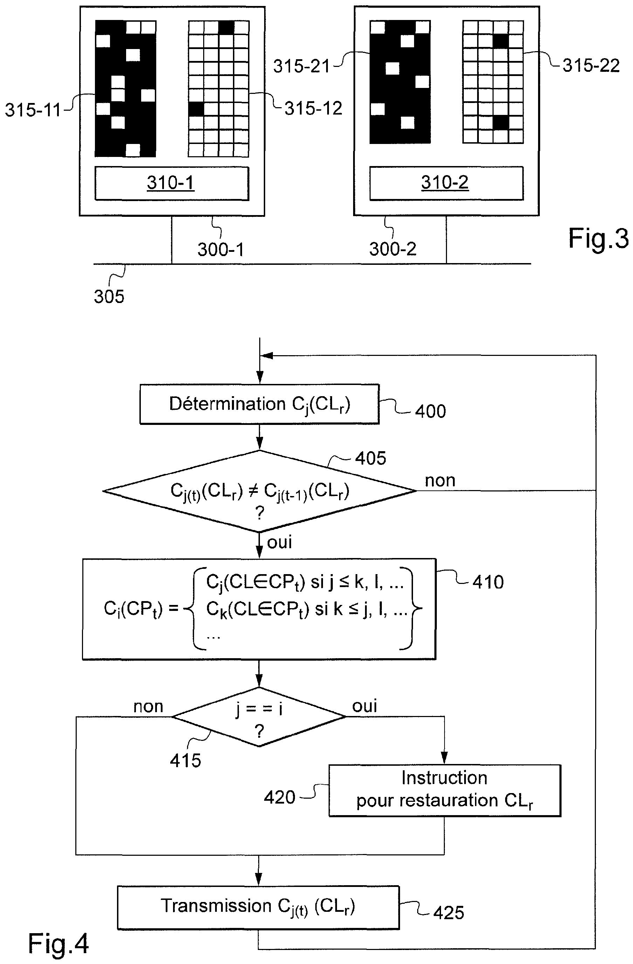

La figure 3 représente de façon simplifiée l'architecture logique d'un microprocesseur d'un noeud appartenant à un cluster, le microprocesseur comprenant ici deux coeurs physiques mettant en oeuvre chacun deux coeurs logiques, c'est-à-dire un microprocesseur dans lequel le *simultaneous multi-threading* a été activé, lorsqu'une application de calcul haute performance est exécutée. Chaque coeur physique permet ici d'exécuter jusqu'à quatre instructions dans un même cycle en raison des différentes unités d'exécution implémentées dans chaque coeur physique. Ainsi, deux coeurs logiques peuvent exécuter chacun jusqu'à quatre instructions selon l'utilisation effectuée par l'autre coeur. En cas de conflit, un mécanisme de résolution de conflit attribue une fois sur deux les ressources visées à chaque coeur logique.

Comme illustré, les coeurs physiques 300-1 et 300-2 sont reliés à un bus système 305 auquel peuvent notamment être connectés une interface de communication et une mémoire. Chaque coeur physique comprend des unités d'exécution partagées entre les coeurs logiques et un registre d'instructions propre à chaque coeur logique.

Ainsi, le coeur physique 300-1 comprend un ensemble 310-1 d'unités d'exécution ainsi que le registre d'instructions 315-11 lié à un premier coeur logique du coeur physique 300-1 et le registre d'instructions 315-12 lié à un second coeur logique du coeur physique 300-1. De même, le coeur physique 300-2 comprend un ensemble 310-2 d'unités d'exécution ainsi que le registre d'instructions 315-21 lié à un premier coeur logique du coeur physique 300-2 et le registre d'instructions 315-22 lié à un second coeur logique du coeur physique 300-2.

Il convient de remarquer ici que, pour des raisons d'optimisation, un coeur logique d'un coeur physique est de préférence assigné à l'exécution d'instructions liées à l'application de calcul haute performance exécutée tandis que l'autre coeur logique du même coeur physique est avantageusement associé à l'exécution de tâches annexes du système d'exploitation généralement appelées démons. Il en résulte que la charge d'un coeur logique est beaucoup plus importante que celle de l'autre coeur logique du même coeur physique. Ainsi, typiquement, la charge d'un coeur logique est proche de cent pour cent tandis que la charge de l'autre coeur logique du même coeur physique est d'environ cinq pour cent.

Il a été observé que les performances d'un cluster sont généralement dégradées lorsque le mode *simultaneous multi-threading* a été activé, c'est-à-dire lorsque des coeurs logiques sont utilisés, et qu'une application de calcul haute performance est exécutée. L'analyse de ce phénomène a montré que cette dégradation de performance était notamment liée à la gestion des fonctions de mise en veille de certains éléments des processeurs. L'invention vise à modifier ces fonctions pour pallier à ce problème de performance.

Il est tout d'abord rappelé que pour des raisons d'économie d'énergie et de contrôle de la température des circuits, les microprocesseurs modernes comprennent des fonctions de mise en veille permettant, selon l'utilisation de leurs ressources, d'arrêter certaines de ces dernières sans réduire significativement, de façon momentanée, les performances de ces processeurs (seules les ressources pas ou peu utilisées sont généralement concernées). L'état de veille d'un coeur de microprocesseur est généralement appelé « *C-state* » en terminologie anglo-saxonne et référencé $C_i$ où $i$ est un index variant de zéro à $n$, $n$ étant typiquement égal à 8. Dans l'état $C_0$, le coeur est actif, ainsi que toutes les ressources qui lui sont liées, tandis que dans l'état $C_8$ le coeur est en veille totale. Les états intermédiaires correspondent à des états de veille intermédiaire. A titre d'illustration, la mémoire cache de niveau 1 d'un coeur physique, appelée cache L1, est mise en veille lorsque le coeur physique est placé dans l'état de veille $C_3$.

L'état de veille d'un coeur physique est souvent déterminé par le système d'exploitation qui le transmet au microprocesseur comprenant le coeur physique. Le microprocesseur gère alors la mise en veille ou, au contraire, le réveil, des ressources correspondantes. En outre, avant de transmettre au microprocesseur un état de veille visant un coeur physique, le système d'exploitation peut lancer des instructions de préparation de mise en veille et/ou pour permettre la restauration du coeur physique en fin de veille. Ainsi, par exemple, lorsqu'un coeur doit passer d'un état de veille $C_2$ à un état de veille $C_3$, le contenu de la mémoire cache de niveau 1 (cache L1) correspondante est recopié dans une autre mémoire, typiquement dans la mémoire cache de niveau 2 associée. Le coeur physique n'est placé dans l'état $C_3$ qu'après cette opération de copie. Après que le coeur physique soit passé de l'état $C_3$ à l'état $C_2$, le contenu de la mémoire cache de niveau 1 est restauré de façon incrémentale lorsque l'application accède aux données correspondantes.

Lorsque le mode *simultaneous multi-threading* est actif, c'est-à-dire lorsque les coeurs logiques sont utilisés, un état de veille souhaité est associé par le système d'exploitation à chaque coeur logique. Cet état de veille souhaité est déterminé par le système d'exploitation qui le transmet au microprocesseur lequel peut alors mettre en veille certaines ressources selon les états de veille souhaités reçus. Lorsque l'état de veille souhaité d'un coeur logique est différent de celui d'un autre coeur logique, l'état de veille appliqué par le microprocesseur au coeur physique est celui selon lequel le plus de ressources sont actives. En d'autres termes, l'état de veille $C_i$ dans lequel est placé un coeur physique comprenant deux coeurs logiques dont les états de veille souhaités sont $C_j$ et $C_k$, respectivement, est déterminé de la façon suivante,

$$C_i = \begin{cases} C_j & si \quad j \le k \\ C_k & si \quad j > k \end{cases}$$

Cependant, il a été observé que même si l'état de veille d'un coeur physique ne change pas en raison de l'état de veille souhaité de chacun des coeurs logiques mis en oeuvre dans ce coeur physique, des instructions préparant à la mise en veille et/ou permettant la restauration d'un coeur logique peuvent être effectuées avant la mise en veille. Ce phénomène résulte du fait que si l'état de veille souhaité des coeurs logiques est déterminé par le système d'exploitation, la décision de changement de l'état du coeur physique est prise par le microprocesseur comprenant le coeur physique, indépendamment du système d'exploitation. Or, l'exécution d'instructions de préparation de mise en veille et/ou permettant la restauration ultérieure d'un coeur logique perturbe le coeur physique. Ainsi, par exemple, lorsque l'état de veille souhaité d'un coeur logique passe de $C_2$ à $C_3$, le contenu de la mémoire cache de niveau 1 est recopié dans une autre mémoire, ce qui perturbe la mémoire cache de niveau 1 vis-à-vis des autres coeurs logiques utilisant cette mémoire cache de niveau 1. Il en résulte une baisse de performance de ces coeurs logiques.

L'invention consiste donc, en particulier, à ne lancer les instructions préparant à la mise en veille et/ou permettant la restauration d'un coeur logique qu'en fonction d'un état de veille estimé du coeur physique, c'est-à-dire en fonction de l'état de veille souhaité de chaque coeur logique d'un coeur physique et non selon le seul état de veille souhaité du coeur logique considéré. En d'autres termes, l'invention vise à simuler dans le système d'exploitation le mécanisme de décision de mise en veille d'un coeur physique en fonction de l'état de veille souhaité des coeurs logiques mis en oeuvre dans ce coeur physique.

La figure 4 illustre un exemple d'algorithme mis en oeuvre par un système d'exploitation ou, plus généralement, par une couche logique d'un ordinateur, pour contrôler un processus de mise en veille d'un coeur physique d'un microprocesseur coopérant avec ce système d'exploitation ou cette couche logique selon l'état de veille souhaité associé à chaque coeur logique mis en oeuvre dans ce coeur physique.

Il convient de noter que l'algorithme illustré sur la figure 4 n'est, de préférence, mis en oeuvre que si le mode *simultaneous multi-threading* est activé. Ainsi, une étape initiale (non représentée) consiste à vérifier l'activation de ce mode.

Après avoir déterminé un état de veille souhaité $C_{j(t)}(CL_r)$ d'un coeur logique $CL_r$ à un instant $t$ (étape 400), un test est effectué (étape 405) pour déterminer si cet état de veille souhaité a changé par rapport à l'état de veille souhaité de ce coeur logique à un instant précédent ($t-1$), noté $C_{j(t-1)}(CL_r)$. Ces étapes d'évaluation d'un état de veille souhaité et de détermination d'un changement d'un état de veille souhaité sont similaires à celles mises en oeuvre dans des systèmes classiques. Elles sont notamment basées sur l'analyse des instructions devant être exécutées par les coeurs logiques considérés.

Si un changement d'état de veille souhaité du coeur logique $CL_r$ est détecté, l'état de veille du coeur physique $CP_t$ dans lequel le coeur logique $CL_r$ est mis en oeuvre est estimé (étape 410). A titre d'illustration, l'état de veille estimé $C_i(CP_t)$ d'un coeur physique $CL_t$ correspond à celui selon lequel le plus de ressources sont actives, c'est-à-dire à l'état de veille souhaité $C_{0...n}$ dont l'indice est le plus petit d'un coeur logique mis en oeuvre sur le coeur physique. Naturellement, le modèle d'estimation de l'état de veille d'un coeur physique doit être conforme à celui réellement mis en oeuvre dans le coeur physique lui-même.

Un test est alors effectué (étape 415) pour déterminer si l'état de veille souhaité $C_j(CL_r)$ du coeur logique $CL_r$ est le même que l'état de veille estimé du coeur physique $CP_t$, c'est-à-dire si les indices $i$ et $j$ sont égaux.

Dans l'affirmative et si le coeur logique CL$_r$ doit être placé dans un état de veille plus profond que l'état de veille précédent, le système d'exploitation (ou la couche logique) lance des instructions de préparation de mise en veille et/ou pour permettre la restauration ultérieure du coeur logique en fin de veille (étape 420). Cette étape consiste par exemple à lancer une opération de copie de contenus de registres. L'état de veille souhaité C$_j$(CL$_r$) est alors transmis au processeur (étape 425) qui, en fonction de l'état de veille souhaité des autres coeurs logiques mis en oeuvre sur le coeur physique CP$_t$ mettant en oeuvre le coeur logique CL$_r$, modifie ou non l'état de veille de ce coeur physique.

Si l'état de veille souhaité C$_j$(CL$_r$) du coeur logique CL$_r$ n'est pas le même que l'état de veille estimé du coeur physique CP$_t$, aucune instruction de préparation de mise en veille et/ou permettant la restauration du coeur logique CL$_r$ en fin de veille n'est transmise au microcesseur. Cependant, comme illustré sur la figure 4, l'état de veille souhaité C$_j$(CL$_r$) du coeur logique CL$_r$ peut néanmoins être transmise au microprocesseur bien que cette étape ne soit pas nécessaire dans la mesure où ce nouvel état de veille souhaité ne modifie pas l'état de veille du coeur physique correspondant.

Selon un mode de réalisation particulier, l'algorithme illustré sur la figure 4 peut être mis en oeuvre dans un noyau de système d'exploitation utilisé, aussi appelé *kernel* en terminologie anglo-saxonne, par exemple dans un *kernel* Linux. L'interception de la fonction de transfert d'un état de veille d'un coeur logique vers le microprocesseur permet alors de lancer ou non les instructions de préparation de mise en veille et/ou permettant la restauration du coeur logique selon l'état de veille estimé du coeur physique mettant en oeuvre ce coeur logique, cette estimation étant réalisée à partir de l'état de tous les coeurs logiques mis en oeuvre par ce coeur physique.

Par ailleurs, bien que l'algorithme décrit en référence à la figure 4 vise la comparaison d'un état de veille souhaité d'un coeur logique avec un état de veille estimé du coeur logique dans lequel il est mis en oeuvre, il est également possible, de façon équivalente, de comparer les états de veille souhaités de coeurs logiques mis en oeuvre dans un même coeur physique pour déterminer si des instructions de préparation de mise en veille et/ou permettant la restauration ultérieure de coeurs logiques doivent être exécutées.

A titre d'illustration, lorsque deux coeurs logiques sont mis en oeuvre dans un même coeur physique, l'état de veille souhaité du premier coeur logique est comparé à celui du second. Ainsi, si l'état de veille et l'état de veille souhaité du premier coeur logique sont C1, si l'état de veille du second coeur logique est C1 et si l'état de veille souhaité du second coeur logique est C2, aucune instruction de préparation de mise en veille et/ou permettant la restauration ultérieure du second coeur logique n'est exécutée car l'état de veille du coeur physique sur lequel sont mis en oeuvre les coeurs logiques n'est pas modifié. Au contraire, si l'état de veille des premier et second coeurs logiques est C1 et si l'état de veille souhaité des premier et second coeurs logiques est C2, des instructions de préparation de mise en veille et/ou permettant la restauration ultérieure des premier et second coeurs logiques sont exécutées car l'état de veille du coeur physique sur lequel sont mis en oeuvre les coeurs logiques est modifié.

Naturellement, pour satisfaire des besoins spécifiques, une personne compétente dans le domaine de l'invention pourra appliquer des modifications dans la description précédente.

**Revendications**

1. Procédé pour ordinateur d'optimisation de gestion de mise en veille d'au moins une partie d'un microprocesseur dudit ordinateur, ledit au moins un microprocesseur permettant la mise en oeuvre d'au moins deux coeurs logiques, ledit au moins un microprocesseur comprenant des moyens de mise en veille d'au moins une ressource commune auxdits au moins deux coeurs logiques, ce procédé étant mis en oeuvre dans une couche logique dudit ordinateur et étant **caractérisé en ce qu'**il comprend les étapes suivantes,

    - détermination (400) d'un état de veille souhaité pour chacun desdits au moins deux coeurs logiques ;
    - comparaison dudit état de veille souhaité de l'un desdits au moins deux coeurs logiques avec ledit état de veille souhaité de l'autre desdits au moins deux coeurs logiques ; et,
    - en réponse à ladite comparaison, lancement (420) d'instructions préparant à ladite mise en veille ou permettant la restauration dudit un desdits au moins deux coeurs logiques après une période de veille ladite étape de comparaison comprenant les étapes suivantes,
    - estimation (410) d'un état de veille dudit microprocesseur selon ledit état de veille souhaité pour chacun desdits au moins deux coeurs logiques ; et
    - comparaison (415) dudit état de veille estimé dudit microprocesseur avec ledit état de veille souhaité dudit un desdits au moins deux coeurs logiques,

lesdites instructions préparant à ladite mise en veille ou permettant la restauration dudit un desdits au moins deux coeurs logiques après une période de veille étant lancées (420) si ledit état de veille estimé dudit microprocesseur correspond audit état de veille évalué dudit un desdits au moins deux coeurs logiques.

2. Procédé selon la revendication 1 comprenant en outre une étape de détection (405) de changement d'un état de veille souhaité d'au moins ledit un desdits au moins deux coeurs logiques, lesdites étapes de comparaison et de lancement d'instructions n'étant effectuées que si un changement d'un état de veille souhaité d'au moins ledit un desdits au moins deux coeurs logiques est détecté.

3. Procédé selon l'une quelconque des revendications précédentes selon lequel ledit au moins un microprocesseur est un microprocesseur multi-coeurs, lesdits au moins deux coeurs logiques étant mis en oeuvre dans un même coeur physique.

4. Procédé selon la revendication précédente comprenant en outre une étape de transmission (425) dudit état de veille souhaité dudit un desdits au moins deux coeurs logiques, ladite étape de transmission étant exécutée après ladite étape de lancement d'instructions.

5. Procédé selon l'une quelconque des revendications précédentes selon lequel ladite couche logique appartient à un système d'exploitation mis en oeuvre dans ledit ordinateur.

6. Procédé selon l'une quelconque des revendications précédentes comprenant une étape initiale de vérification d'activation d'un mode permettant la mise en oeuvre de coeurs logiques dans ledit microprocesseur.

7. Procédé selon l'une quelconque des revendications précédentes selon lequel la mise en oeuvre desdits au moins deux coeurs logiques est basée sur un mode appelé *simultaneous multi-threading.*

8. Programme d'ordinateur comprenant des instructions adaptées à la mise en oeuvre de chacune des étapes du procédé selon l'une quelconque des revendications précédentes lorsque ledit programme est exécuté sur un ordinateur.

9. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 7.

**Patentansprüche**

1. Computerverfahren zur optimierten Standby-Verwaltung zumindest eines Teils eines Mikroprozessors des Computers, wobei der mindestens eine Mikroprozessor die Implementierung von wenigstens zwei logischen Kernen erlaubt und der mindestens eine Mikroprozessor Mittel zum Versetzen wenigstens einer den wenigstens zwei logischen Kernen gemeinsamen Ressource in einen Wartezustand umfasst, wobei das Verfahren in einer logischen Schicht des Computers ausgeführt wird und **dadurch gekennzeichnet ist, dass** es die folgenden Schritte umfasst:

- Bestimmen (400) eines gewünschten Wartezustands für jeden der wenigstens zwei logischen Kerne;
- Vergleichen des gewünschten Wartezustands eines der wenigstens zwei logischen Kerne mit dem gewünschten Wartezustand des anderen der wenigstens zwei logischen Kerne, und
- als Reaktion auf den Vergleich, Ausführen (420) von Befehlen, um die Versetzung in den Wartezustand vorzubereiten oder die Wiederherstellung des einen der wenigstens zwei logischen Kerne nach einer Warteperiode zu ermöglichen,

wobei der Vergleichsschritt folgende Schritte umfasst:

- Schätzen (410) eines Wartezustands des Mikroprozessors gemäß dem gewünschten Wartezustand für jeden der wenigstens zwei logischen Kerne, und
- Vergleichen (415) des geschätzten Wartezustands des Mikroprozessors mit dem gewünschten Wartezustand des einen der wenigstens zwei logischen Kerne,

wobei die Befehle zur Vorbereitung der Versetzung in den Wartezustand oder zum Ermöglichen der Wiederherstellung des einen der wenigstens zwei logischen Kerne nach einer Warteperiode erteilt werden (420), wenn der geschätzte Wartezustand des Mikroprozessors dem ausgewerteten Wartezustand des einen der wenigstens zwei logischen Kerne entspricht.

2. Verfahren nach Anspruch 1, ferner umfassend einen Schritt zur Erkennung (405) einer Veränderung eines gewünschten Wartezustands wenigstens des einen der wenigstens zwei logischen Kerne, wobei die Schritte des Vergleichens und des Erteilens von Befehlen erst ausgeführt werden, wenn eine Veränderung des gewünschten Wartezustands wenigstens des einen der wenigstens zwei logischen Kerne erkannt wird.

3. Verfahren nach einem der vorhergehenden Ansprüche, bei dem der wenigstens eine Mikroprozessor ein Multicore-Mikroprozessor ist und die wenigstens zwei logischen Kerne in demselben physikalischen Kern implementiert sind.

**4.** Verfahren nach dem vorhergehenden Anspruch, ferner umfassend einen Schritt zur Übertragung (425) des gewünschten Wartezustands des einen der wenigstens zwei logischen Kerne, wobei der Übertragungsschritt nach dem Schritt der Befehlserteilung ausgeführt wird.

**5.** Verfahren nach einem der vorhergehenden Ansprüche, bei dem die logische Schicht zu einem im Computer implementierten Verarbeitungssystem gehört.

**6.** Verfahren nach einem der vorhergehenden Ansprüche, umfassend einen anfänglichen Schritt zur Überprüfung der Aktivierung eines Modus, der die Implementierung logischer Kerne in dem Mikroprozessor ermöglicht.

**7.** Verfahren nach einem der vorhergehenden Ansprüche, bei dem die Implementierung der wenigstens zwei logischen Kerne auf einem Modus basiert, der als *simultaneous multi-threading* bezeichnet wird.

**8.** Computerprogramm, umfassend Befehle, die zur Implementierung jedes der Schritte des Verfahrens nach einem der vorhergehenden Ansprüche vorgesehen sind, wenn das Programm auf einem Computer ausgeführt wird.

**9.** Informationsspeichermittel, das wechselbar ist oder nicht und teilweise oder vollständig für einen Computer oder einen Mikroprozessor lesbar ist, umfassend Codebefehle eines Computerprogramms zur Ausführung jedes der Schritte des Verfahrens nach einem der Ansprüche 1 bis 7.

**Claims**

**1.** A method for a computer for optimizing management of placing on standby of at least part of a microprocessor of said computer, said at least one microprocessor enabling the implementation of at least two logical cores, said at least one microprocessor comprising means for placing on standby of at least one resource common to said at least two logical cores, said method being implemented in a logical layer of said computer and being **characterized in that** it comprises the following steps,

- determining (400) a desired standby state for each of said at least two logical cores;
- comparing said desired standby state of one of said at least two logical cores with said desired standby state of the other of said at least two logical cores; and,
- in response to said comparison, launching (420) instructions preparing for said placing on standby or enabling the restoration of said one of said at least two logical cores after a period of standby,
- estimating (410) a standby state of said microprocessor according to said desired standby state for each of said at least two logical cores; and
- comparing (415) said estimated standby state of said microprocessor with said desired standby state of said one of said at least two logical cores,

said instructions preparing for said placing on standby or enabling the restoration of said one of said at least two logical cores after a period of standby being launched (420) if said estimated standby state of said microprocessor corresponds to said evaluated standby state of said one of said at least two logical cores.

**2.** A method according to claim 1 further comprising a step of detecting (405) change of a desired standby state of at least said one of said at least two logical cores, said steps of comparing and launching instructions only being carried out if a change in a desired standby state of at least said one of said at least two logical cores is detected.

**3.** A method according to any one of the preceding claims wherein said at least one microprocessor is a multi-core microprocessor, said at least two logical cores being implemented in a same physical core.

**4.** A method according to the preceding claim further comprising a step of sending (425) said desired standby state of said one of said at least two logical cores, said sending step being executed after said step of launching instructions.

**5.** A method according to any one of the preceding claims wherein said logical layer belongs to an operating system implemented in said computer.

**6.** A method according to any one of the preceding claims comprising an initial step of verifying activation of a mode enabling the implementation of logical cores in said microprocessor.

**7.** A method according to any one of the preceding claims wherein the implementation of said at least two logical cores is based on a mode called *simultaneous multi-threading.*

**8.** A computer program comprising instructions adapted for the carrying out of each of the steps of the method according to any one of the preceding claims when said program is executed on a computer.

**9.** An information storage means, removable or not, partially or totally readable by a computer or a microprocessor containing code instructions of a computer program for executing each of the steps of the method according to any one of claims 1 to 7.

Fig.1

| | | | |
|---|---|---|---|
| RAM | RAM | RAM | RAM | 206 |
| CPU | CPU | CPU | CPU | 204 |

202

Interfaces de communication

208

Stockage interne (Disque dur)

210

200

Fig.2

315-11 — 315-12

310-1

300-1

315-21 — 315-22

310-2

300-2

305

**Fig.3**

Détermination $C_j(CL_r)$ — 400

405

$C_{j(t)}(CL_r) \neq C_{j(t-1)}(CL_r)$ ?

non

oui

$C_i(CP_t) = \begin{cases} C_j(CL \in CP_t) \text{ si } j \leq k, l, ... \\ C_k(CL \in CP_t) \text{ si } k \leq j, l, ... \\ ... \end{cases}$ — 410

non

$j == i$ ?

oui

415

420 — Instruction pour restauration $CL_r$

Transmission $C_{j(t)}(CL_r)$ — 425

**Fig.4**

**RÉFÉRENCES CITÉES DANS LA DESCRIPTION**

**Documents brevets cités dans la description**

- US 20040107374 A
- US 20040107369 A
- US 20060069936 A